# EUROPÄISCHE PATENTSCHRIFT

(11) **EP 2 787 246 B1**
(45) Veröffentlichungstag und Bekanntmachung des Hinweises auf die Patenterteilung: **21.12.2016**
(21) Anmeldenummer: 14161449.5
(22) Anmeldetag: 25.03.2014
(51) Int. Cl.: F16G 11/10

(54) **Haltevorrichtung**
Clamping device
Dispositif de retenue

(30) Priorität: 28.03.2013 DE 102013205695
(43) Veröffentlichungstag der Anmeldung: 08.10.2014
(73) Patentinhaber: B & K Braun GmbH, 76307 Karlsbad-Ittersbach (DE)
(72) Erfinder: Bo, Christensen, 6430 Nordborg (DK)
(74) Vertreter: Zinkler, Franz

(56) Entgegenhaltungen:
- DE-B- 1 172 567
- DE-C- 966 333
- DE-C1- 4 104 896
- GB-A- 2 247 926
- US-A- 4 830 340

## Beschreibung

Ausführungsbeispiele der vorliegenden Erfindung beziehen sich auf eine Haltevorrichtung für ein zylindrisches Element und ein Verfahren zur Betätigung der Haltevorrichtung.

Unter einem zylindrischen Element kann beispielsweise ein Stahldraht, Seil oder Kabel verstanden werden. In der Theater- und Bühnenunterhaltung werden häufig mittels hängenden Stahldrähten oder auch mittels hängenden Kabeln Beleuchtungselemente, Träger mit Beleuchtungsgeräten oder andere bühnenbezogenen Element befestigt. Hierbei kommen typischerweise sogenannte Kabelhalter bzw. allgemein Haltevorrichtungen zum Einsatz. Die Durchmesser der Kabel oder Drähte können teilweise erheblich variieren, wobei die herkömmlichen Kabelhalter typischerweise nur für einen (Kabel-)Durchmesser bzw. einen Durchmesserbereich ausgelegt sind. Dies hat zur Folge, dass weitere zylindrische Elemente mit abweichendem Durchmesser nicht gehalten werden können bzw. dass Beschädigungen, wie z.B. Einkerbungen, an diesen nicht vermeidbar sind. Ferner hängen die Halteeigenschaften bei herkömmlichen Haltevorrichtungen stark von der verwendeten Materialpaarung zwischen dem Halter und dem zu haltenden zylindrischen Element ab. Deshalb besteht der Bedarf nach einem verbesserten Ansatz.

Beispielsweise beschreibt die Patentschrift DE 41 04 896 C1 eine Vorrichtung zum Abfangen eines Bohrgestänges. Die Vorrichtung umfasst einen Abfangrahmen mit einer Widerlagerrolle und einem schwenkbaren rollenartigen Gestängeklemmelement. Mittels diesem Gestängeklemmelement, welches eine Klemmrille aufweist, wird das Bohrgestänge festgeklemmt. Eine derartige Vorrichtung ist auf maximale Klemmkraft ausgelegt, da das Bohrgestänge typischerweise nicht flexibel ist. Insofern muss bei der Klemmung von einem Festgestänge auch nicht auf einen materialschonenden Griff geachtet werden.

Aufgabe der vorliegenden Erfindung ist es, eine Haltevorrichtung zu schaffen, die flexibel einsetzbar ist und optimierte ergonomische Eigenschaften aufweist.

Die Aufgabe wird durch die unabhängigen Ansprüche 1 und 15 gelöst. Ausführungsbeispiele der vorliegenden Erfindung schaffen eine Haltevorrichtung für ein zylindrisches Element, wie z.B. ein Kabel. Die Haltevorrichtung umfasst einen Hauptkörper und zwei drehbar auf dem Hauptkörper gelagerte Klemmelemente, die jeweils einen zumindest partiellen Zylindersegmentabschnitt mit einer radialen Klemmrille (z.B. mit einer halbrunden oder V-förmigen Form) aufweisen. Die Klemmelemente sind relativ zueinander so angeordnet sind, dass zwischen den radialen Klemmrillen der zwei Zylindersegmentabschnitte ein Klemmbereich ausgebildet ist. Die Haltevorrichtung ist ausgebildet ist, um eine Querschnittsfläche des Klemmbereichs bei einer Drehung der Klemmelemente zu variieren.

Der Kern der vorliegenden Erfindung liegt darin, dass eine Haltevorrichtung flexibel hinsichtlich der zu haltenden (zylindrischen) Elemente gestaltet werden kann, wenn die Querschnittsfläche des Klemmbereichs variierbar ist. Durch die Variation der Querschnittsfläche erfolgt auch gleichzeitig das Klemmen bzw. Halten des zu haltenden Elements. Ein schonender Klemmgriff des zu haltenden Elements kann erreicht werden, wenn die Variation der Querschnittsfläche bei einer Drehbewegung von (beispielsweise rollenförmigen) Klemmelementen bzw. von zwei (tangential gegenüberliegend angeordneten) Zylindersegmentabschnitten der Klemmelemente erfolgt, wobei zwischen den zwei Zylindersegmentabschnitten ein Klemmbereich ausgebildet wird. Hintergrund hierzu ist, dass so scharfe Kanten im Klemmbereich (die zu Beschädigungen führen können) vermieden werden können. Jeder Zylindersegmentabschnitt weist darüber hinaus noch eine radiale Klemmrille auf, um die Eingriffsoberfläche zu dem zylindrischen Element zu vergrößern. Also kann vorteilhafterweise ein sicherer und zerstörungsfreier Eingriff zwischen der Haltevorrichtung und dem zu haltenden zylindrischen Element unabhängig von Durchmesser, Flexibilität und Material hergestellt werden. Da der Eingriff zwischen dem zu haltenden Element und der Haltevorrichtung über Drehen (der Klemmelemente) hergestellt bzw. gelöst wird, ergeben sich zusätzliche Vorteile hinsichtlich Ergonomie.

Entsprechend weiteren Ausführungsbeispielen wird die Variation der Querschnittsfläche dadurch erreicht, dass die Klemmrillen, mittels welcher der Eingriff zu dem zylindrischen Element hergestellt wird, jeweils einen sich entlang des jeweiligen Zylindersegmentabschnitts erstreckenden und sich bezüglich der Tiefe und/oder der Breite der Klemmrille verjüngenden Verjüngungsbereich aufweisen. Beispielsweise kann der Verjüngungsbereich der einen Klemmrille gegenüber der gegenüberliegenden Klemmrille derart gebildet sein, dass die Querschnittsfläche des Klemmbereichs bei einer gegenläufigen Drehung der zwei Klemmelemente variiert (verkleinert oder vergrößert) wird.

Entsprechend weiteren Ausführungsbeispielen kann die Variation auch dadurch erfolgen, dass die drehbar auf dem Hauptkörper gelagerten Klemmelemente mit den Zylindersegmentabschnitten exzentrisch gegenüber dem Hauptkörper gelagert sind, so dass der Abstand zwischen den zwei Klemmelementen bei einer (gegenläufigen) Drehung ebenfalls veränderbar ist.

Bei beiden Ausführungsbeispielen können die Rotationsrichtungen der Klemmelemente derart ausgebildet sein, dass diese sich entgegen einer Kraftrichtung der aufzunehmenden Kraft des zylinderförmigen Elements erstreckt, was zur Folge hat, dass durch Krafteinwirkung des zylinderförmigen Elements bzw. über das zylinderförmige Element die Klemmkraft verstärkt wird.

Entsprechend weiteren Ausführungsbeispielen weist die Haltvorrichtung mindestens eine Feder auf, die ausgebildet ist, um die zwei oder zumindest eines der Klemmelemente in eine Position mit reduzierter Querschnittsfläche zu bewegen bzw. zu drehen. Dies bietet den Vorteil, dass bei einer geöffneten Haltevorrichtung, dieselbe, nach Einlegen des zu haltenden zylindrischen Elements, automatisch geschlossen wird. Entsprechend weiteren Ausführungsbeispielen sind die zwei oder zumindest eines der Klemmelemente von außen bedienbar, so dass diese geöffnet werden können. Hierbei können die zwei Klemmelement, z.B. wie Zahnrädern, ineinander eingreifen, sodass eine Bewegung des einen Klemmelements auch eine Bewegung des anderen Klemmelements verursacht. Folglich ist es also möglich, nur das eine Klemmelement zu betätigen, um so beide Klemmelemente in eine geöffnete Position zu bewegen.

Ein weiteres Ausführungsbeispiel bezieht sich auf ein Verfahren zur Bedienung der Haltevorrichtung mit dem Schritt des Drehens der Klemmelemente, so dass eine Querschnittsfläche des Klemmbereichs variiert wird.

Ausführungsbeispiele der vorliegenden Erfindung werden anhand der beiliegenden Zeichnungen näher erläutert. Es zeigen:
- Fig. 1: eine schematische isometrische Darstellung einer Haltevorrichtung zum Halten eines zylindrischen Elements gemäß einem Ausführungsbeispiel;
- Fig. 2a: eine isometrische Ansicht einer weiteren Haltevorrichtung gemäß einem weiteren Ausführungsbeispiel;
- Fig. 2b, 2c: zwei orthogonale Ansichten der Haltevorrichtung gemäß Fig. 2a;
- Fig. 2d: eine Expositionsdarstellung der Haltevorrichtung aus Fig. 2a;
- Fig. 2e: eine Schnittdarstellung der Haltevorrichtung aus Fig. 2a;
- Fig. 2f, 3g: Detailansichten der Klemmelemente der Haltevorrichtung aus Fig. 2a mit unterschiedlichen Formen der Klemmrillen (V-förmig und halbrund); und
- Fig. 3a, 3b: isometrische Ansichten einer weiteren Haltevorrichtung gemäß einem weiteren Ausführungsbeispiel in zwei unterschiedlichen Positionen der Klemmelemente.

Bevor nachfolgend Ausführungsbeispiele der vorliegenden Erfindung anhand der Figuren näher erläutert werden, wird darauf hingewiesen, dass gleiche oder gleichwirkende Elemente und Strukturen mit gleichen Bezugszeichen versehen sind, so dass die Beschreibung derer austauschbar ist bzw. aufeinander angewendet werden kann.

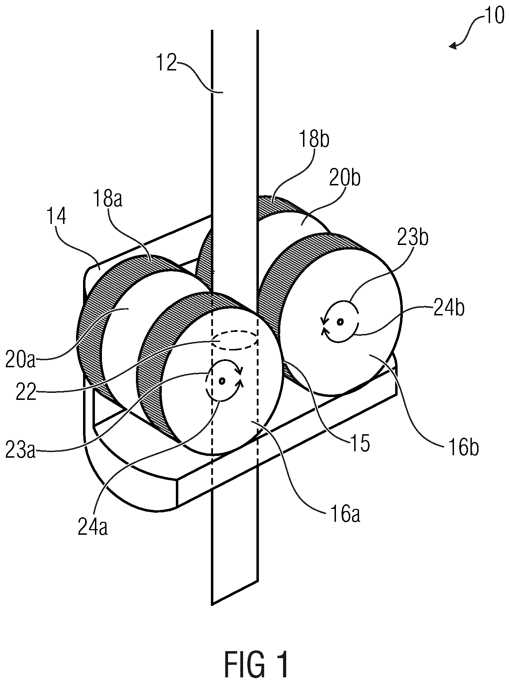

Fig. 1 zeigt eine Haltevorrichtung 10 für ein zylindrisches Element 12, wie z.B. ein Seil oder Kabel. Die Haltevorrichtung 10 umfasst einen Hauptkörper 14 und zwei Klemmelemente 16a und 16b, die drehbar auf dem Hauptkörper 14 gelagert sind. Die zwei Klemmelemente 16a und 16b sind in diesem Ausführungsbeispiel als rotorische Walzen ausgeführt, weisen aber im Allgemeinen zumindest einen partiellen Zylindersegmentabschnitt 18a bzw. 18b auf, der sich nicht zwingend über den vollen Umfang des jeweiligen Klemmelements 16a bzw. 16b erstrecken muss. In die Zylindersegmentabschnitte 18a und 18b sind jeweils radiale Klemmrillen 20a und 20b eingebracht, die dazu dienen, den Eingriff mit dem zylindrischen Element 12 herzustellen bzw. dieses in der gewünschten Position zu halten. Die Klemmrillen 20a und 20b sind einander gegenüberliegend, so dass zwischen diesen eine Querschnittsfläche, z.B. eine runde oder annähernd runde Querschnittsfläche, ausgebildet wird, die den Klemmbereich 22 bildet.

Die Querschnittsfläche 22 ist in der geschlossenen Position so gewählt bzw. eingestellt, dass diese kleiner oder zumindest gleich groß der Querschnittsfläche des zylindrischen Elements 12 ist, um ein Klemmen (Keilwirkung) bzw. einen Reibschluss zwischen dem Klemmbereich 22 und dem zylindrischen Element 12 zu bewirken. Hierbei kann die Form der zwei Klemmrillen 20a und 20b bevorzugterweise an die Form des zylindrischen Elements 20 angepasst sein, um so eine maximale Kontaktoberfläche zu dem zu haltenden zylindrischen Element 12 herzustellen. Beispielsweise kann jede der zwei Klemmrillen 20a und 20b eine halbrunde oder V-förmige Form aufweisen. Mit anderen Worten heißt das, dass der Klemmbereich 22 zwischen den zwei rotorisch geformten Klemmelementen 16a und 16b bzw. zwischen den zwei Zylindersegmentabschnitten 18a und 18b ausgebildet wird, wobei sich das festzuklemmende zylindrische Element 12 senkrecht durch den über die Klemmrillen 20a und 20b definierten Klemmbereich 22 erstreckt, sodass die Klemmelemente 16a oder 16b in Bezug auf die Mittelachse des zu haltenden zylindrischen Elements 12 tangential angeordnet sind.

Um ein Lösen und Festklemmen des zylindrischen Elements zu ermöglichen, ist die Querschnittsfläche 22 variabel ausgeführt. Hierzu sind die zwei Klemmelemente 16a und 16b, die über die Klemmrillen 20a und 20b letztendlich die Querschnittsfläche 22 bestimmen, drehbar gegenüber dem Hauptkörper 14 gelagert. Bei einer Drehung des ersten und/oder zweiten Klemmelements 16a und 16b in entgegengesetzte Richtungen 23a und 23b wird die Querschnittsfläche 22 variiert, indem sich die zwei Klemmrillen 20a und 20b annähern bzw. voneinander entfernen. Die Variation der Querschnittsfläche 22 kann auf unterschiedlichen Mechanismen erfolgen, wobei im Folgenden exemplarisch zwei Mechanismen erläutert werden.

Entsprechend einem ersten Ausführungsbeispiel sind die zwei Klemmelemente 16a und 16b exzentrisch gegenüber dem Hauptkörper 14 gelagert, so dass bei Verdrehung der zwei Klemmelemente 16a und 16b sich der Abstand zwischen den Zylindersegmentabschnitten 18a und 18b und damit die Querschnittsfläche 22 verändert. So vergrößert sich die Querschnittsfläche 22, wenn die zwei Klemmelemente 16a und 16b gegenläufig in eine erste Richtung 24a und 24b rotiert werden, wobei sich die Querschnittsfläche 22 verkleinert, wenn die zwei Klemmelemente 16a und 16b entgegengesetzt in eine zweite Richtung (vgl. Vektoren 23a und 23b) rotiert werden. Es sei angemerkt, dass die Richtungsvektoren 23a und 23b im Vergleich zu den Richtungsvektoren 24a und 24b gegenläufig orientiert sind. Durch die Variation der Querschnittsfläche 22 kann mit derselben Haltevorrichtung 10 sowohl ein dünnes Drahtseil aber auch im Extremfall ein dickes Tau (Schiffstau) eingeklemmt werden. Für diesen Kraftschluss ist es vorteilhafterweise auch unerheblich, ob ein weiches Tau oder ein harter Draht gehalten werden soll.

Entsprechend einem bevorzugten Ausführungsbeispiel erfolgt die Variation der Querschnittsfläche 22 dadurch, dass die zwei Klemmrillen 20a und 20b sich entlang der jeweiligen Zylindersegmentabschnitte 18a und 18b verjüngen. Hierzu weist jede Klemmrille 20a und 20b einen sich entlang des jeweiligen Zylindersegmentabschnitts 18a und 18b erstreckenden Verjüngungsbereich 20a und 20b auf. Über diesen Verjüngungsbereich 20a und 20b werden Tiefe und/oder Breite der Klemmrillen 20a und 20b reduziert. Die zwei Verjüngungsbereiche 20a und 20b sind gegenläufig orientiert, so dass weiterhin bei einer entgegengesetzten Drehung in der ersten Richtung (vgl. Pfeile 24a und 24b) eine Vergrößerung der Querschnittsfläche 22 erfolgt, während es bei einer (entgegengesetzten) Drehung in der zweiten Richtung (vgl. Pfeile 23a und 23b) zu einer Verkleinerung bzw. Einschnürung der Querschnittsfläche 22 kommt. Die Verjüngungsbereiche 20a und 20b können auch anhand von Verjüngungsvektoren beschrieben werden, die sich entlang der Zylinderflächensegmente 18a und 18b erstrecken. Die Verjüngungsvektoren für die zwei Verjüngungsbereiche 20a und 20b entsprechend den Rotationsvektoren 23a und 23b. Die beiden Verjüngungsvektoren 23a und 23b verlaufen im Klemmbereich 22 tangential zueinander, und auch tangential zu dem zylindrischen Element 12.

Diese Anordnung hat den Vorteil, dass die zwei Klemmelemente 16a und 16b entsprechend weiteren Ausführungsbeispielen über die Zylindersegmentabschnitte 18a und 18b miteinander rotorisch gekoppelt werden können (vgl. Berührpunkt 15), so dass eine Drehung des einen Klemmelements 16a (z.B. entlang des Vektors 23a) zu einer (gegenläufigen) Drehung des anderen Klemmelements 16b (z.B. entlang des Vektors 23b) führt. Diese Kopplung kann beispielsweise reibschlüssig erfolgen oder dadurch, dass die Zylindersegmentabschnitte 18a und 18b als ineinander eingreifende Zahnradpaare geformt sind. Die Zahnräder 18a und 18b oder allgemein die Eingriffnahmeabschnitte 18a und 18b dienen dazu, einen synchronen Lauf der zwei Klemmelemente 16a und 16b sicherzustellen, so dass die Verjüngung der Rillen 20a und 20b an dem Berührpunkt 15, an denen sich die zwei Rollen 16a und 16b treffen, immer gleichbleibt. In der Konsequenz wird durch die Synchronisation der Drehbewegungen der zwei Klemmelemente 16a und 16b eine Einhandbedienung ermöglicht bzw. erleichtert, da zum Öffnen oder Schließen des Klemmbereichs 22 (bzw. allgemein zur Variation der Querschnittsfläche 22) nur die Bedienung eines der zwei Klemmelemente 16a oder 16b erforderlich ist.

Entsprechend weiteren Ausführungsbeispielen ist die Richtung der zwei Verjüngungsvektoren 23a und 23b ist so gewählt, dass bei einer Befestigung des Halteelements 10 an dem zylindrischen Element 12, das beispielsweise senkrecht herunterhängt, es infolge der Schwerkraft der Haltevorrichtung 10 selbst bzw. einer an der Haltevorrichtung 10 befestigten Last zu einer Drehung der Klemmelement 16a und 16b entlang der Rotationsvektoren 23a und 23b kommt, die zu einer Verkleinerung der Querschnittsfläche 22 und damit zu einer Verstärkung der Klemmkraft führt. Hierdurch erfolgt eine Art Selbstsicherung der Haltevorrichtung 10.

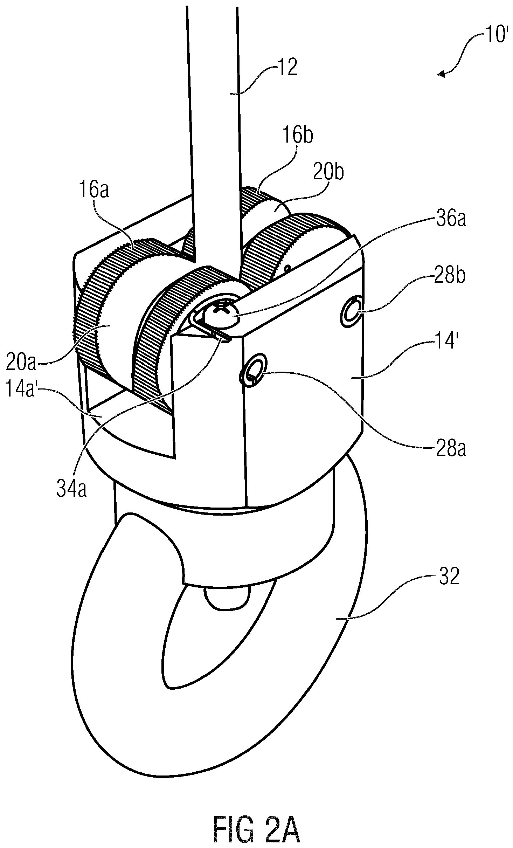

Nachfolgend wird Bezug nehmend auf Fig. 2a bis 2g ein weiteres bevorzugtes Ausführungsbeispiel erläutert.

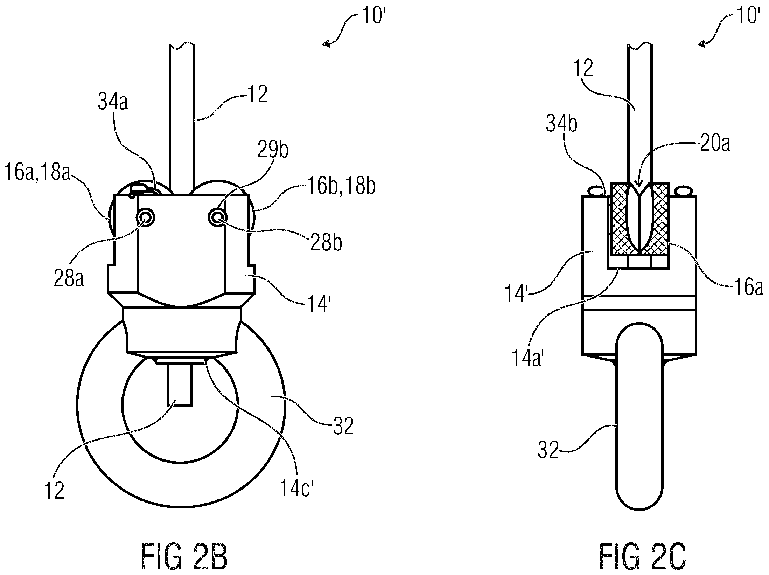

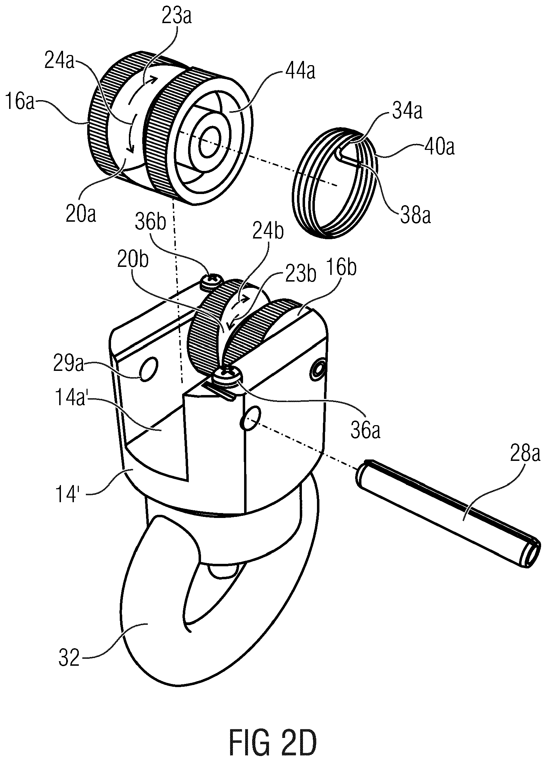

Fig. 2a zeigt eine Haltevorrichtung 10', die einen Hauptkörper 14' und die zwei Klemmelemente 16a und 16b bzw. die mit den Klemmrillen 20a und 20b versehenen Rollen 16a und 16b umfasst. Der Hauptkörper 14' weist in diesem Ausführungsbeispiel eine Aussparung 14a' für die zwei Klemmelemente 16a und 16b auf, in welcher die zwei Klemmelemente 16a und 16b mittels zweier Stifte 28a und 28b rotorisch gegenüber dem Hauptkörper 10' gelagert sind. In Hinblick auf Fig. 2b und 2d geht hervor, dass der Hauptkörper 14' zwei Bohrungen 29a und 29b für die zwei Stifte 28a und 28b aufweist, die die Aussparung 14a' (senkrecht) kreuzen.

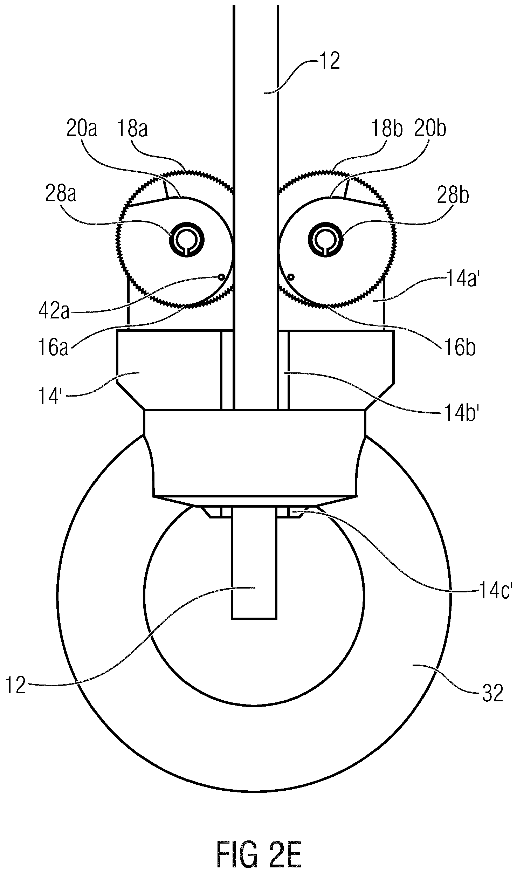

Wie insbesondere aus Fig. 2b hervorgeht, sind die zwei Rotationsachsen (definiert durch die Bolzen 28a und 28b) parallel zueinander und derart beabstandet, dass, wie bereits erläutert, die zwei Klemmelemente 16a und 16b über die zwei Zylindersegmentabschnitte 18a und 18b miteinander in Eingriff sind (vgl. Berührpunkt 15). Senkrecht zu diesen zwei Achsen verläuft das zu haltende zylindrische Elemente 12 durch den Halter 10', was insbesondere aus Fig. 2c und 2e hervorgeht. Hierzu weist der Hauptkörper 14' in dem Ausschnitt 14a' einen Bohrung 14c' zur Durchführung des zu haltenden zylindrischen Elements 12 auf.

Entsprechend weiteren Ausführungsbeispielen kann der Hauptkörper 14' auch ein Gewinde 14c' auf einer dem Ausschnitt 14a' gegenüberliegenden Seite zur Aufnahme einer Halterung 32, wie z.B. einer anschraubbaren Öse, umfassen. Dieser mittels der Ringmutter aufgeschraubte Halter 32 ermöglicht das Einhängen einer Lampe oder eines anderen Gegenstands oder eines weiteren flexiblen, zylindrischen Elements (Seils).

Entsprechend weiteren Ausführungsbeispielen kann die Haltevorrichtung 10' ein oder mehrere Federn, z.B. die Biegefedern 34a und 34b, aufweisen. Die Federn 34a und 34b sind zwischen dem Hauptkörper 14' und dem jeweiligen Klemmelement 16a bzw. 16b angeordnet. Nachfolgend wird die mittels der Federn 34a und 34b erzielte Funktionsweise exemplarisch anhand der Feder 34a diskutiert.

Durch die Feder 34a kann eine Federkraft, hier in Form eines Rotationsmomentes, zwischen dem Klemmelement 16a und dem Hauptkörper 14' erzeugt werden, so dass das Klemmelement 16a in die Richtung 23a gedreht wird, so dass die schmalsten Punkte des Verjüngungsbereichs 20a mit dem zylindrischen Element 12 in Eingriff gebracht werden. Analog hierzu erfolgt das Ineingriffbringen des Verjüngungsbereichs 20b des zweiten Klemmelements 16b, wobei hier die Kraft entweder über eine weitere Federkraft der zweiten (optionalen) Feder 34b aufgebracht wird oder auf der Federkraft der ersten Feder 34a basiert, wenn die zwei Klemmelemente 16a und 16b über den Berührpunkt 15 synchronisiert sind.

Zur Befestigung der Feder 34a bzw. 34b kann der Hauptkörper 14' eine optionale Federaufnahme 36a bzw. 36b aufweisen, die hier als Rille mit einer Sicherungsschraube ausgeführt ist. Diese Federhalter 36a und 36b sind z.B. auf einer ersten Seite des Hauptkörpers 14' angeordnet, die dem Gewinde 14c' gegenüberliegt. Nachfolgend wird der genaue Aufbau der Federn 34a und 34b insbesondere in Hinblick auf die Befestigung derselben exemplarisch anhand der Feder 34a diskutiert.

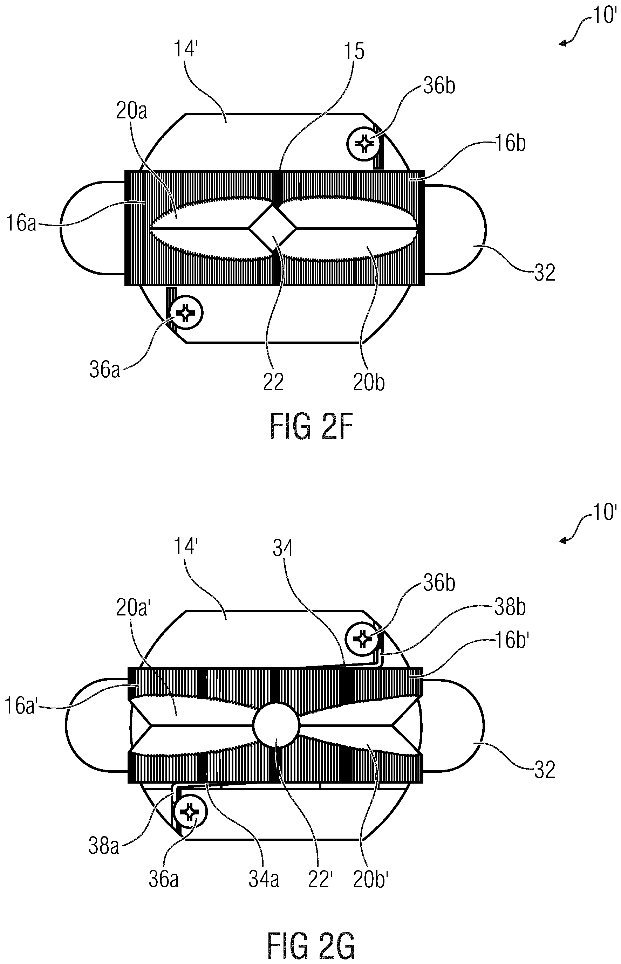

Die Feder 34a greift mit einem ersten Vorsprung 38a in die Rille des Federhalters 36a ein. Wie insbesondere aus Fig. 2g zu erkennen ist, wird der Vorsprung 38a durch die Schraube der Befestigung 36a gesichert, die ausgebildet ist, um den Vorsprung 38a zwischen Schraubenkopf und Rille zu fixieren. Ferner greift die Feder 34a mit einem zweiten Vorsprung 40a in eine Bohrung 42a des Klemmelements 16a bzw. der Rolle 16a ein. Die Rolle 16a kann hier optional eine auf einer Stirnseite des Klemmelements 16a (bzw. seitlich) angeordnete, rotorische Aussparung 44a oder zylindrische Rille 44a aufweisen, in welche die Feder 34a eingelegt ist.

Fig. 2f und 2g zeigen jeweils eine Aufsicht auf die erste Seite der Haltevorrichtung 10', wobei in Fig. 2f die Klemmelemente 16a und 16b den in Fig. 2a bis 2e gezeigten entsprechen, also jeweils eine V-förmig Rille 20a bzw. 20b aufweisen. Im Gegensatz dazu unterscheiden sich die in Fig. 2g gezeigten Klemmelemente 16a' und 16b'dadurch, dass die Klemmrille 20a' und 20b' jeweils eine halbrunde Form aufweist.

Infolgedessen ist die Querschnittsfläche des Klemmbereichs 22' (zwischen den Klemmnuten 20a' und 20b' rund ausgebildet, während die Querschnittsfläche des Klemmbereichs 22 (zwischen den Klemmnuten 20a und 20b) rautenförmig ausgebildet ist. Alternativ wären auch weitere Formen der Klemmrillen 20a und 20b bzw. 20a' und 20b', wie z.B. eine halbhexagonale Form, denkbar.

Nachfolgend wird Bezug nehmend auf die Fig. 2a bis 2g die Bedienung der Haltevorrichtung 10' erläutert. Die Haltevorrichtung 10' ist so ausgebildet, dass dieselbe ohne Weiteres mit einer Hand betätigt werden kann. Ein einfaches Drehen einer der Rollen 16a oder 16b in die entgegengesetzte Richtung der Greifrichtung (bezogen auf Fig. 2d Rolle 16a im Uhrzeigersinn und Rolle 16b gegen den Uhrzeigersinn) ermöglicht, dass sich dieselbe öffnet bzw. die Querschnittsfläche 22 bzw. 22' vergrößert, um das zu haltende Element 12 freizugeben. Wie oben bereits erläutert, erfolgt durch die Berührung an dem Berührpunkt 15 der zwei Rollen 16a und 16b eine Synchronisation der Bewegung derselben. Somit kann ein Nutzer das zu haltende Element 12 mit einer Hand in dem Halter 10' positionieren und platzieren. Sobald das zu haltende Element 12 in der gewünschten Position platziert ist, kann der Nutzer die Rollen 16a und 16b wieder freigeben. Die Rollen 16a und 16b werden dann durch die Wirkung der Federn 34a und/oder 34b in die Ausgangsposition bzw. geschlossene Position zurückkehren. Somit greifen die Klemmnuten 20a und 20b bzw. 20a' und 20b' in das zu haltende Element 12 ein, um eine Reibschlüssige Verbindung herzustellen.

Das so eingeklemmte Seil hält nun durch die Federkraft. Weitere Spannungen, z.B. infolge einer Gewichtskraft an dem zu haltenden Element 12 führen zu einer Vergrößerung der Keilwirkung. Wenn die Klemmelemente 16a und/oder 16b in entgegengesetzter Richtung gedreht werden, wird das zu haltende Element 21 wieder freigegeben und kann so entweder aus der Haltevorrichtung 10' entfernt oder neu positioniert werden.

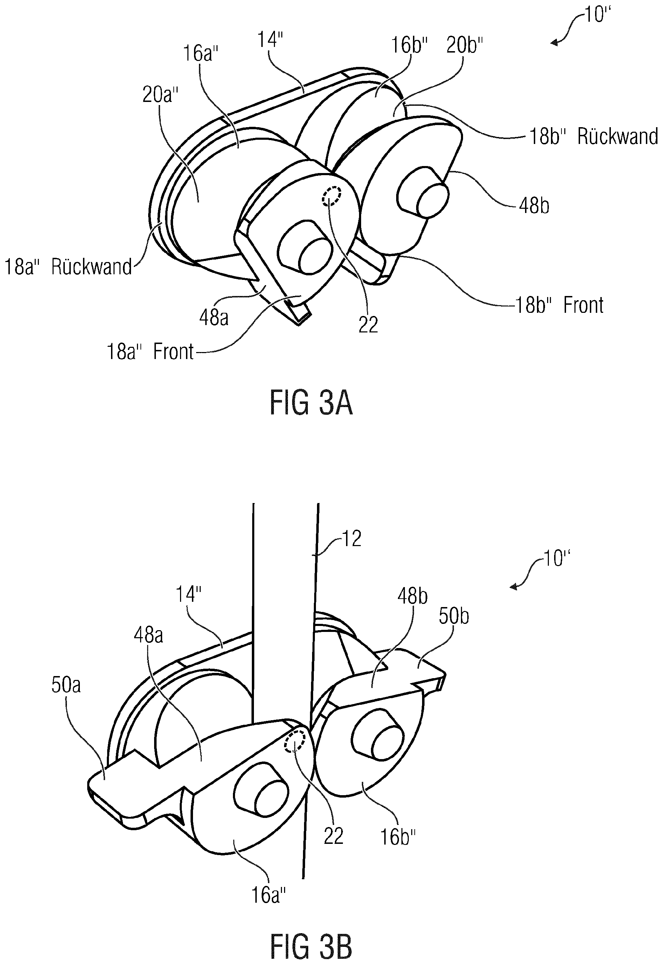

In obigen Ausführungsbeispielen wurde insbesondere davon ausgegangen, dass die Klemmelemente 16a und 16b als Rollen 16a und 16b ausgeführt sind und so sich der zugehörige Zylindersegmentabschnitt 18a und 18b um den gesamten Umfang der Rollen 16a und 16b erstreckt. Wie Bezug nehmend auf Fig. 3a und 3b erläutert werden wird, kann es vorteilhaft sein, dass sich die Zylindersegmente nicht um den gesamten Umfang erstrecken.

Fig. 3a zeigt eine Haltevorrichtung 10" mit einem Hauptkörper 14" und zwei auf dem Hauptkörper rotorisch gelagerten Klemmelementen 16a" und 16b", wobei in diesem Ausführungsbeispiel der Hauptkörper 14" nur als Rückwand mit zwei rotorischen Lagerungen (nicht dargestellt) gebildet ist. Die Klemmelemente 16a" und 16b" weisen jeweils eine Klemmnut 20a" und 20b" auf, die grundsätzlich der oben beschriebenen Klemmnut 20a und 20b entsprechen.

In diesem Ausführungsbeispiel weist jedes der Klemmelemente 16a und 16b zwei unterschiedliche Zylindersegmentabschnitte 18a"_{Rückwand} und 18a"_{Front} bzw. 18b"_{Rückwand} und 18b"18a"_{Front} auf. Hier ist der jeweilige, der dem Hauptkörper 14" zugewandte Zylindersegmentabschnitt 18a"_{Rückwand} und 18b"_{Rückwand} als 360°-Zylindersegment gebildet, während der gegenüberliegende Zylindersegmentabschnitt 18a"_{Front} bzw. 18b"_{Front} einen abgeflachten Bereich 48a bzw. 48b aufweist. Infolgedessen erstreckt sich der Zylindersegmentabschnitt 18a"_{Front} bzw. 18b"_{Front} nicht über die vollen 360°, sondern beispielsweise nur über 240°. Dies hat den Vorteil, dass, wenn die zwei abgeflachten Bereiche 48a und 48b aneinander gegenüberliegen, das Seil bzw. das zylindrische Element 12 direkt von vorne eingelegt werden kann, ohne dieses durch den Klemmbereich 22' durchzufädeln.

Wie in Fig. 3b dargestellt ist, erfolgt der Eingriff mit dem zu haltenden Element 12 über den Klemmbereich 22, wie entsprechend den obigen Ausführungsbeispielen diskutiert.

Entsprechend einem weiteren Ausführungsbeispiel können die zwei Klemmelemente 16a" und/oder 16b" jeweils einen Eingriffnahmeabschnitt 50a und/oder 50b aufweisen, der einen Hebelarm gegenüber dem Drehpunkt der Klemmelemente 16a" und 16b" ausbildet, um die Bedienung durch den Nutzer (Drehung der Klemmelemente 16a" und 16b") zu vereinfachen. Die Eingriffnahmeabschnitte 50a bzw. 50b können beispielsweise als Verlängerung des abgeflachten Bereichs 48a bzw. 48b ausgeführt sein.

Bezugnehmend auf Fig. 1 und 2 sein angemerkt, dass die Rotationsvektoren 23a, 24a, 23b und 24b bevorzugt in einer gemeinsamen Ebene (parallel zu einer durch den Hauptkörper 14 definierten Ebene) liegen. Ferner ist diese gemeinsame Ebene der Rotationsvektoren 23a, 24a, 23b und 24b parallel zu einer Ebene, die durch die zwei Klemmrillen 20a und 20b definiert wird. In Fig. 2c ist insbesondere zu erkennen, dass die Ebene der Klemmnuten 20a und 20b ebenfalls senkrecht zu den zwei Rotationsachsen 28a und 28b, also parallel zu dem zu haltenden zylindrischen Element 12 verläuft.

Darüber hinaus sei angemerkt, dass die Ebene der Klemmrille 20a und 20b alternativ die Ebene der Rotationsvektoren 23a, 24a, 23b und 24b schneiden kann, wenn also die Klemmrille 20a und 20b schräg angeordnet sind.

An dieser Stelle sei in Hinblick auf Fig. 2a bis 2e angemerkt, dass die oben beschriebenen ein oder mehreren Federn 34a und 34b auch anders ausgeführt sein können. z.B. als eine Schraubenfeder, die zwischen die zwei drehbar gelagerten Klemmelemente 16a und 16b eingehängt ist.

Bezugnehmend auf Fig. 2a bis 2g sei angemerkt, dass sich die Klemmnuten 20a und 20b entsprechend alternativen Ausführungsformen auch in beide Richtungen 23a und 24a bzw. 23b und 24b oder auch nur in die Richtung 24a bzw. 24b verjüngt sein können.

Auch wenn bei obigen Ausführungsbeispielen immer davon ausgegangen wurde, dass zumindest ein Teil des Zylinderkreissegmentabschnitts 18a bzw. 18b oder 18a"_{Rückwand} bzw. 18b"_{Rückwand} als 360°-Segment ausgeführt ist, so sei an dieser Stelle angemerkt, dass der entsprechende Zylindersegmentabschnitt des Klemmelements 16a und/oder 16b auch kleiner (z.B. 180°) ausgeführt sein kann.

Gemäß Ausführungsbeispielen kann jedes Klemmelement 16a, 16b, 16a', 16b', 16a", 16b" einen an den jeweiligen Zylindersegmentabschnitt 18a, 18b, 18a"Rückwand, 18b"Rückwand, 18a"Front, 18b"Front angrenzenden, abgeflachten Bereich 48a, 48b aufweisen, und wobei zwischen den zwei gegenüberliegenden abgeflachten Bereichen ein Abstand ausbildbar ist, der größer ist als ein Durchmesser des zylindrischen Elements 12.

Gemäß Ausführungsbeispielen kann zumindest eines der zwei Klemmelemente 16a, 16b, 16a', 16b', 16a", 16b" einen Eingriffnahmeabschnitt aufweisen, mittels welchem das jeweilige Klemmelement 16a, 16b, 16a', 16b', 16a", 16b") entgegen dem jeweiligen Verjüngungsvektor (24a, 24b) drehbar ist.

Gemäß Ausführungsbeispielen kann das zylindrische Element 12 ein flexibles Element, ein Kabel, ein Seil oder einen Draht umfassen.

Gemäß Ausführungsbeispielen kann der Hauptkörper 14, 14', 14" einen Befestigungsabschnitt 32 zur Aufnahme einer Last aufweisen.

Gemäß Ausführungsbeispielen kann der Befestigungsabschnitt 32 aufgeschraubt sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Haltevorrichtung (10, 10', 10") für ein flexibles, zylindrisches Element (12), mit folgenden Merkmalen:
einem Hauptkörper (14, 14', 14"); und
zwei drehbar auf dem Hauptkörper (14, 14', 14") gelagerten Klemmelementen (16a, 16b, 16a', 16b', 16a", 16b"), die jeweils einen zumindest partiellen Zylindersegmentabschnitt (18a, 18b, 18a"_{Rückwand}, 18b"_{Rückwand}, 18a"_{Front}, 18b"_{Front}) mit einer radialen Klemmrille (20a, 20b, 20a', 20b', 20a", 20b") aufweisen; und
wobei die zwei Klemmelemente (16a, 16b, 16a', 16b', 16a", 16b") relativ zueinander so angeordnet sind, dass zwischen den radialen Klemmrillen (20a, 20b, 20a', 20b', 20a", 20b") der zwei Zylindersegmentabschnitte (18a, 18b, 18a"_{Rückwand}, 18b"_{Rückwand}, 18a"_{Front}, 18b"_{Front}) ein Klemmbereich (22, 22') ausgebildet ist,
wobei Haltevorrichtung (10, 10', 10") so ausgebildet ist, dass eine Querschnittsfläche (22, 22') des Klemmbereichs (22, 22') bei einer Drehung der Klemmelemente (16a, 16b, 16a', 16b', 16a", 16b") variiert wird,
**dadurch gekennzeichnet, dass** die zwei Klemmrillen (20a, 20b, 20a', 20b', 20a", 20b") jeweils einen sich entlang des jeweiligen Zylindersegmentabschnitts (18a, 18b, 18a"_{Rückwand}, 18b"_{Rückwand}, 18a"_{Front}, 18b"_{Front}) erstreckenden und sich bezüglich der Tiefe und/oder der Breite der Klemmrille (20a, 20b, 20a', 20b', 20a", 20b") verjüngenden Verjüngungsbereich (20a, 20b, 20a', 20b', 20a", 20b") aufweisen.

2. Haltevorrichtung (10, 10', 10") gemäß Anspruch 1, wobei Klemmbereich (22, 22') tangential zwischen den zwei Klemmelementen (16a, 16b, 16a', 16b', 16a", 16b") gebildet ist.

3. Haltevorrichtung (10, 10', 10") gemäß Anspruch 2, wobei der Verjüngungsbereich (20a, 20b, 20a', 20b', 20a", 20b") der einen Klemmrille (20a, 20b, 20a', 20b', 20a", 20b") gegenüber der gegenüberliegenden Klemmrille (20a, 20b, 20a', 20b', 20a", 20b") derart gebildet ist, dass die Querschnittsfläche (22, 22') des Klemmbereichs bei einer gegenläufigen Drehung der zwei Klemmelemente (16a, 16b, 16a', 16b', 16a", 16b") variiert.

4. Haltevorrichtung (10, 10', 10") gemäß einem der Ansprüche 1 bis 3, wobei sich die zwei Klemmrillen (20a, 20b, 20a', 20b', 20a", 20b") jeweils entlang eines rotorischen Verjüngungsvektors (24a, 24b) verjüngen, und wobei die zwei rotorischen Verjüngungsvektoren (24a, 24b) der zwei Klemmrillen (20a, 20b, 20a', 20b', 20a", 20b") sich entlang der Zylindersegmentabschnitte (18a, 18b, 18a"_{Rückwand}, 18b"_{Rückwand}, 18a"_{Front}, 18b"_{Front}) erstrecken und gegenläufig zueinander orientiert sind.

5. Haltevorrichtung (10, 10', 10") gemäß einem der Ansprüche 1 bis 4, wobei die zwei Klemmrillen (20a, 20b, 20a', 20b', 20a", 20b") eine V-Form, halbhexagonale Form oder halbrunde Form aufweisen.

6. Haltevorrichtung (10, 10', 10") gemäß einem der Ansprüche 1 bis 5, wobei die Klemmrillen (20a, 20b, 20a', 20b', 20a", 20b") innerhalb einer gemeinsamen Ebene liegen; und/oder wobei die zwei Klemmelemente (16a, 16b, 16a', 16b', 16a", 16b") jeweils entlang eines Rotationsvektors (23a, 23b, 24a, 24b) drehbar sind, und wobei die Rotationsvektoren (23a, 23b, 24a, 24b) innerhalb einer gemeinsamen Ebene liegen.

7. Haltevorrichtung (10, 10', 10") gemäß Anspruch 6, wobei die Klemmrillen (20a, 20b, 20a', 20b', 20a", 20b") innerhalb einer gemeinsamen Ebene liegen, und wobei die gemeinsame Ebene die gemeinsame Ebene der Klemmrillen (20a, 20b, 20a', 20b', 20a", 20b") schneidet; und/oder wobei die Querschnittsfläche (22, 22') eine zylindrische Form aufweist und/oder ausgebildet ist, um das zylindrische Element (12) zu umschließen.

8. Haltevorrichtung (10, 10', 10") gemäß einem der Ansprüche 1 bis 7, wobei die zwei Klemmelemente (16a, 16b, 16a', 16b', 16a", 16b") über die Zylindersegmentabschnitte (18a, 18b, 18a"_{Rückwand}, 18b"_{Rückwand}, 18a"_{Front}, 18b"_{Front}) reibschlüssig und/oder formschlüssig miteinander gekoppelt sind, so dass bei einer Drehung eines der zwei Klemmelemente (16a, 16b, 16a', 16b', 16a", 16b") eine gegenläufige Drehung des anderen der zwei Klemmelemente (16a, 16b, 16a', 16b', 16a", 16b") erfolgt.

9. Haltevorrichtung (10, 10', 10") gemäß einem der Ansprüche 1 bis 8, wobei die Haltevorrichtung (10, 10', 10") ausgebildet ist, um mittels einer Klemmkraft und/oder Reibkraft, die zwischen dem zylindrischen Element (12) und den Klemmrillen (20a, 20b, 20a', 20b', 20a", 20b") wirkt, eine Zugkraft, die tangential entlang des zylindrischen Elements (12) auf dasselbe wirkt, aufzunehmen.

10. Haltevorrichtung (10, 10', 10") gemäß Anspruch 9, wobei sich die zwei Klemmrillen (20a, 20b, 20a', 20b', 20a", 20b") jeweils entlang eines rotorischen Verjüngungsvektors (24a, 24b) verjüngen, und wobei die zwei rotorischen Verjüngungsvektoren (24a, 24b) der zwei Klemmrillen (20a, 20b, 20a', 20b', 20a", 20b") sich entlang der Zylindersegmentabschnitte (18a, 18b, 18a"_{Rückwand}, 18b"_{Rückwand}, 18a"_{Front}, 18b"_{Front}) erstrecken und gegenläufig zueinander orientiert sind, und wobei die Zugkraft in einer Zugrichtung wirkt, die tangential entlang der zwei rotorischen Verjüngungsvektoren (24a, 24b) verläuft.

11. Haltevorrichtung (10, 10', 10") gemäß Anspruch 4, die zumindest eine zwischen dem Hauptkörper (14, 14', 14") und einem der zwei Klemmelemente (16a, 16b, 16a', 16b', 16a", 16b") angeordnete Feder (34a, 34b) aufweist, die ausgebildet ist, um mit einer Federkraft entlang des jeweiligen Verjüngungsvektors (24a, 24b) auf das jeweilige Klemmelement (16a, 16b, 16a', 16b', 16a", 16b") zu wirken.

12. Haltevorrichtung (10, 10', 10") gemäß einem der Ansprüche 1 bis 11, wobei die Klemmelemente (16a, 16b, 16a', 16b', 16a", 16b") durch Rollen mit längs oder schräg auf der Zylindersegmentabschnitt (18a, 18b, 18a"_{Rückwand}, 18b"_{Rückwand}, 18a"_{Front}, 18b"_{Front}) angeordneten Klemmrillen (20a, 20b, 20a', 20b', 20a", 20b") gebildet sind.

13. Haltevorrichtung (10, 10', 10") gemäß einem der Ansprüche 1 bis 12, wobei der Hauptkörper (14, 14', 14") eine Aussparung (14a') für die zwei Klemmelemente (16a, 16b, 16a', 16b', 16a", 16b") und zwei senkrecht zu der Aussparung (14a'), in dem Bereich der Aussparung (14a') eingebrachte Bohrungen (29a, 29b) aufweist, und wobei jedes der zwei Klemmelemente (16a, 16b, 16a', 16b', 16a", 16b") mittels einer sich durch die Bohrung (29a, 29b) erstreckender Achse (28a, 28b) gelagert ist.

14. Haltevorrichtung (10, 10', 10") gemäß Anspruch 13,
wobei sich die zwei Klemmrillen (20a, 20b, 20a', 20b', 20a", 20b") jeweils entlang eines rotorischen Verjüngungsvektors (24a, 24b) verjüngen, und wobei die zwei rotorischen Verjüngungsvektoren (24a, 24b) der zwei Klemmrillen (20a, 20b, 20a', 20b', 20a", 20b") sich entlang der Zylindersegmentabschnitte (18a, 18b, 18a"_{Rückwand}, 18b"_{Rückwand}, 18a"_{Front}, 18b"_{Front}) erstrecken und gegenläufig zueinander orientiert sind, und
wobei die Haltevorrichtung (10, 10', 10") zwei Spiralfedern (34a, 34b) aufweist, wobei jede Spiralfeder (34a, 34b) mit einer Schraube (36a, 36b) an dem Hauptkörper (14, 14', 14") befestigt ist und so mit dem jeweiligen Klemmelement (16a, 16b, 16a', 16b', 16a", 16b") in Eingriff ist, dass eine Federkraft entlang des jeweiligen Verjüngungsvektors (24a, 24b) auf das jeweilige Klemmelement (16a, 16b, 16a', 16b', 16a", 16b") wirkt.

15. Verfahren zum Betätigen einer Haltevorrichtung (10, 10', 10") für ein flexibles, zylindrisches Element (12), wobei die Haltevorrichtung (10, 10', 10") einem Hauptkörper (14, 14', 14") und zwei drehbar auf dem Hauptkörper (14, 14', 14") gelagerten Klemmelementen (16a, 16b, 16a', 16b', 16a", 16b") umfasst, und wobei die zwei Klemmelemente (16a, 16b, 16a', 16b', 16a", 16b") jeweils einen zumindest partiellen Zylindersegmentabschnitt (18a, 18b, 18a"_{Rückwand}, 18b"_{Rückwand}, 18a"_{Front}, 18b"_{Front}) mit einer radialen Klemmrille (20a, 20b, 20a', 20b', 20a", 20b") aufweisen und relativ zueinander so angeordnet sind, dass zwischen den radialen Klemmrillen (20a, 20b, 20a', 20b', 20a", 20b") der zwei Zylindersegmentabschnitte (18a, 18b, 18a"_{Rückwand}, 18b"_{Rückwand}, 18a"_{Front}, 18b"_{Front}) ein Klemmbereich (22, 22') ausgebildet ist, wobei die zwei Klemmrillen (20a, 20b, 20a', 20b', 20a", 20b") jeweils einen sich entlang des jeweiligen Zylindersegmentabschnitts (18a, 18b, 18a"_{Rückwand}, 18b"_{Rückwand}, 18a"_{Front}, 18b"_{Front}) erstreckenden und sich bezüglich der Tiefe und/oder der Breite der Klemmrille (20a, 20b, 20a', 20b', 20a", 20b") verjüngenden Verjüngungsbereich (20a, 20b, 20a', 20b', 20a", 20b") aufweisen, mit folgendem Schritt:
Drehen der Klemmelemente (16a, 16b, 16a', 16b', 16a", 16b"), so dass eine Querschnittsfläche (22, 22') des Klemmbereichs variiert wird.

## Claims

1. A support apparatus (10, 10', 10") for a flexible, cylindrical element (12), comprising:
a main body (14, 14', 14"); and
two clamping elements (16a, 16b, 16a', 16b', 16a", 16b") rotatably mounted on the main body (14, 14', 14"), each comprising an at least partial cylinder segment portion (18a, 18b, 18a"_{rear wall}, 18b"_{rear wall}, 18a"_{front}, 18b"_{front}) with a radial clamping groove (20a, 20b, 20a', 20b', 20a", 20b"); and
wherein the two clamping elements (16a, 16b, 16a', 16b', 16a", 16b") are arranged relative to each other such that a clamping region (22, 22') is formed between the radial clamping grooves (20a, 20b, 20a', 20b', 20a", 20b") of the two cylinder segment portions (18a, 18b, 18a"_{rear wall}, 18b"_{rear wall}, 18a"_{front}, 18b"_{front}),
wherein the support apparatus (10, 10', 10") is configured such that a cross-sectional area (22, 22') of the clamping region (22, 22') is varied upon rotation of the clamping elements (16a, 16b, 16a', 16b', 16a", 16b"),
**characterized in that** the two clamping grooves (20a, 20b, 20a', 20b', 20a", 20b") each comprise a tapering region (20a, 20b, 20a', 20b', 20a", 20b") extending along the respective cylinder segment portion (18a, 18b, 18a"_{rear wall}, 18b"_{rear wall}, 18a"_{front}, 18b"_{front}) and tapering with respect to the depth and/or width of the clamping groove (20a, 20b, 20a', 20b', 20a", 20b").

2. The support apparatus (10, 10', 10") according to claim 1, wherein the clamping region (22, 22') is formed tangentially between the two clamping elements (16a, 16b, 16a', 16b', 16a", 16b").

3. The support apparatus (10, 10', 10") according to claim 2, wherein the tapering region (20a, 20b, 20a', 20b', 20a", 20b") of the one clamping groove (20a, 20b, 20a', 20b', 20a", 20b") opposing the opposite clamping groove (20a, 20b, 20a', 20b', 20a", 20b") is formed such that the cross-sectional area (22, 22') of the clamping region varies upon inverse rotation of the two clamping elements (16a, 16b, 16a', 16b', 16a", 16b").

4. The support apparatus (10, 10', 10") according to any one of claims 1 to 3, wherein the two clamping grooves (20a, 20b, 20a', 20b', 20a", 20b") each taper along a rotatory tapering vector (24a, 24b), and wherein the two rotatory tapering vectors (24a, 24b) of the two clamping grooves (20a, 20b, 20a', 20b', 20a", 20b") extend along the cylinder segment portions (18a, 18b, 18a"_{rear wall}, 18b"_{rear wall}, 18a"_{front}, 18b"_{front}) and are inversely orientated relative to each other.

5. The support apparatus (10, 10', 10") according to any one of claims 1 to 4, wherein the two clamping grooves (20a, 20b, 20a', 20b', 20a", 20b") comprise a V-shape, a semi-hexagonal shape or a semicircular shape.

6. The support apparatus (10, 10', 10") according to any one of claims 1 to 5, wherein the clamping grooves (20a, 20b, 20a', 20b', 20a", 20b") are located within a common plane; and/or wherein the two clamping elements (16a, 16b, 16a', 16b', 16a", 16b") each are rotatable along a rotation vector (23a, 23b, 24a, 24b), and wherein the rotation vectors (23a, 23b, 24a, 24b) are located within a common plane.

7. The support apparatus (10, 10', 10") according to claim 6, wherein the clamping grooves (20a, 20b, 20a', 20b', 20a", 20b") are located within a common plane, and wherein the common plane intersects the common plane of the clamping grooves (20a, 20b, 20a', 20b', 20a", 20b"); and/or wherein the cross-sectional area (22, 22') comprises a cylindrical shape and/or is configured to enclose the cylindrical element (12).

8. The support apparatus (10, 10', 10") according to any one of claims 1 to 7, wherein the two clamping elements (16a, 16b, 16a', 16b', 16a", 16b") are frictionally and/or positively coupled to each other via the cylinder segment portions (18a, 18b, 18a"_{rear wall}, 18b"_{rear wall}, 18a"_{front}, 18b"_{front}) so that, upon rotation of one of the two clamping elements (16a, 16b, 16a', 16b', 16a", 16b"), a reverse rotation of the other one of the two clamping elements (16a, 16b, 16a', 16b', 16a", 16b") is carried out.

9. The support apparatus (10, 10', 10") according to any one of claims 1 to 8, the support apparatus (10, 10', 10") being configured to receive, by means of a clamping force and/or a friction force acting between the cylindrical element (12) and the clamping grooves (20a, 20b, 20a', 20b', 20a", 20b"), a tensile force acting tangentially along and on the cylindrical element (12).

10. The support apparatus (10, 10', 10") according to claim 9, wherein the two clamping grooves (20a, 20b, 20a', 20b', 20a", 20b") each taper along a rotatory tapering vector (24a, 24b), and wherein the two rotatory tapering vectors (24a, 24b) of the two clamping grooves (20a, 20b, 20a', 20b', 20a", 20b") extend along the cylinder segment portions (18a, 18b, 18a"_{rear wall}, 18b"_{rear wall}, 18a"_{front}, 18b"_{front}) and are inversely orientated relative to each other, and
wherein the tensile force acts in a tensile direction extending along the two rotatory tapering vectors (24a, 24b).

11. The support apparatus (10, 10', 10") according to claim 4, comprising at least one spring (34a, 34b) arranged between the main body (14, 14', 14") and one of the two clamping elements (16a, 16b, 16a', 16b', 16a", 16b"), and being configured to act with a spring force on the respective clamping element (16a, 16b, 16a', 16b', 16a", 16b") along the respective tapering vector (24a, 24b).

12. The support apparatus (10, 10', 10") according to any one of claims 1 to 11, wherein the clamping elements (16a, 16b, 16a', 16b', 16a", 16b") are formed by rollers having clamping grooves (20a, 20b, 20a', 20b', 20a", 20b") longitudinally or obliquely arranged on the cylinder segment portion (18a, 18b, 18a"_{rear wall}, 18b"_{rear wall}, 18a"_{front}, 18b"_{front}).

13. The support apparatus (10, 10', 10") according to any one of claims 1 to 12, wherein the main body (14, 14', 14") comprises a recess (14a') for the two clamping elements (16a, 16b, 16a', 16b', 16a", 16b") und two bores (29a, 29b) introduced perpendicularly to the recess (14a') in the region of the recess (14a'), and wherein each of the two clamping elements (16a, 16b, 16a', 16b', 16a", 16b") is mounted by means of an axis (28a, 28b) extending through the bore (29a, 29b).

14. The support apparatus (10, 10', 10") according to claim 13,
wherein the two clamping grooves (20a, 20b, 20a', 20b', 20a", 20b") each taper along a rotatory tapering vector (24a, 24b), and wherein the two rotatory tapering vectors (24a, 24b) of the two clamping grooves (20a, 20b, 20a', 20b', 20a", 20b") extend along the cylinder segment portions (18a, 18b, 18a"_{rear wall}, 18b"_{rear wall}, 18a"_{front}, 18b"_{front}) and are inversely orientated relative to each other, and
wherein the support apparatus (10, 10', 10") comprises two spiral springs (34a, 34b), each spiral spring (34a, 34b) being attached to the main body (14, 14', 14") by a screw (36a, 36b) and engaging the respective clamping element (16a, 16b, 16a', 16b', 16a", 16b") such that a spring force acts on the respective clamping element (16a, 16b, 16a', 16b', 16a", 16b") along the respective tapering vector (24a, 24b).

15. Method for operating a support apparatus (10, 10', 10") for a flexible, cylindrical element (12), wherein the support apparatus (10, 10', 10") includes a main body (14, 14', 14") and two clamping elements (16a, 16b, 16a', 16b', 16a", 16b") rotatably mounted on the main body (14, 14', 14"), and wherein the two clamping elements (16a, 16b, 16a', 16b', 16a", 16b") each comprise an at least partial cylinder segment portion (18a, 18b, 18a"_{rear wall}, 18b"_{rear wall}, 18a"_{front}, 18b"_{front}) having a radial clamping groove (20a, 20b, 20a', 20b', 20a", 20b") and are arranged relative to each other such that a clamping region (22, 22') is formed between the radial clamping grooves (20a, 20b, 20a', 20b', 20a", 20b") of the two cylinder segment portions (18a, 18b, 18a"_{rear wall}, 18b"_{rear wall}, 18a"_{front}, 18b"_{front}), wherein the two clamping grooves (20a, 20b, 20a', 20b', 20a", 20b") each comprise a tapering region (20a, 20b, 20a', 20b', 20a", 20b") extending along the respective cylinder segment portion (18a, 18b, 18a"_{rear wall}, 18b"_{rear wall}, 18a"_{front}, 18b"_{front}) and tapering with respect to the depth and/or width of the clamping groove (20a, 20b, 20a', 20b', 20a", 20b"), comprising:
rotating the clamping elements (16a, 16b, 16a', 16b', 16a", 16b") so that a cross-sectional area (22, 22') of the clamping region is varied.

## Revendications

1. Dispositif de retenue (10, 10', 10") d'un élément cylindrique souple (12), aux caractéristiques suivantes:
un corps principal (14, 14', 14"); et
deux éléments de serrage (16a, 16b, 16a', 16b', 16a", 16b"), montés de manière rotative sur le corps principal (14, 14', 14"), qui présentent, chacun, un segment au moins partiellement en segment de cylindre (18a, 18b, 18a"_{Rückwand}, 18b"_{Rückwand}, 18a"_{Front}, 18b"_{Front}) avec une rainure de serrage radiale (20a, 20b, 20a', 20b', 20a", 20b"); et
dans lequel les deux éléments de serrage (16a, 16b, 16a', 16b', 16a", 16b") sont disposés l'un par rapport à l'autre de sorte qu'entre les rainures de serrage radiales (20a, 20b, 20a', 20b', 20a", 20b") des deux segments en segment de cylindre (18a, 18b, 18a"_{Rückwand}, 18b"_{Rückwand}, 18a"_{Front}, 18b"_{Front}) soit réalisée une zone de serrage (22, 22'),
dans lequel le dispositif de retenue (10, 10', 10") est réalisé de sorte qu'une surface de section (22, 22') de la zone de serrage (22, 22') soit modifiée lors d'une rotation des éléments de serrage (16a, 16b, 16a', 16b', 16a", 16b"),
**caractérisé par le fait que** les deux rainures de serrage (20a, 20b, 20a', 20b', 20a", 20b") présentent, chacune, une zone de rétrécissement s'étendant le long du segment en segment de cylindre respectif (18a, 18b, 18a"_{Rückwand}, 18b"_{Rückwand}, 18a"_{Front}, 18b"_{Front}) et se rétrécissant par rapport à la profondeur et/ou à la largeur de la rainure de serrage (20a, 20b, 20a', 20b', 20a", 20b") (20a, 20a', 20b', 20a", 20b").

2. Dispositif de retenue (10, 10', 10") selon la revendication 1, dans lequel la zone de serrage (22, 22') est réalisée tangentielle entre les deux éléments de serrage (16a, 16b, 16a', 16b', 16a", 16b").

3. Dispositif de retenue (10, 10', 10") selon la revendication 2, dans lequel la zone conique (20a, 20b, 20a', 20b', 20a", 20b") de l'une rainure de serrage (20a, 20b, 20a', 20b', 20a", 20b") est réalisée en face de la rainure de serrage opposée (20a, 20b, 20a', 20b', 20a", 20b") de sorte que la surface de section (22, 22') de la zone de serrage varie en cas de rotation en sens opposé des deux éléments de serrage (16a, 16b, 16a', 16b', 16a", 16b").

4. Dispositif de retenue (10, 10', 10") selon l'une des revendications 1 à 3, dans lequel les deux rainures de serrage (20a, 20b, 20a', 20b', 20a", 20b") se rétrécissent, chacune, le long d'un vecteur de rétrécissement rotorique (24a, 24b), et dans lequel les deux vecteurs de rétrécissement rotoriques (24a, 24b) des deux rainures de serrage (20a, 20b, 20a', 20b', 20a", 20b") s'étendent le long des segments en segment de cylindre (18a, 18b, 18a"_{Ruckwand}, 18b"_{Rückwand}, 18a"_{Front}, 18b"_{Front}) et sont orientés en direction opposée l'un à l'autre.

5. Dispositif de retenue (10, 10', 10") selon l'une des revendications 1 à 4, dans lequel les deux rainures de serrage (20a, 20b, 20a', 20b', 20a", 20b") présentent une forme en "V", une forme semi-hexagonale ou une forme semi-ronde.

6. Dispositif de retenue (10, 10', 10") selon l'une des revendications 1 à 5, dans lequel les rainures de serrage (20a, 20b, 20a', 20b', 20a", 20b") se situent dans un plan commun; et/ou dans lequel les deux éléments de serrage (16a, 16b, 16a', 16b', 16a", 16b") peuvent tourner, chacun, le long d'un vecteur de rotation (23a, 23b, 24a, 24b), et dans lequel les vecteurs de rotation (23a, 23b, 24a, 24b) se situent dans un plan commun.

7. Dispositif de retenue (10, 10', 10") selon la revendication 6, dans lequel les rainures de serrage (20a, 20b, 20a', 20b', 20a", 20b") se situent dans un plan commun, et dans lequel le plan commun vient en intersection avec le plan commun des rainures de serrage (20a, 20b, 20a', 20b', 20a", 20b"); et/ou dans lequel la surface de section (22, 22') présente une forme cylindrique et/ou est réalisée de manière à entourer l'élément cylindrique (12).

8. Dispositif de retenue (10, 10', 10") selon l'une des revendications 1 à 7, dans lequel les deux éléments de serrage (16a, 16b, 16a', 16b', 16a", 16b") sont couplés l'un à l'autre en liaison de friction et/ou en liaison de forme par l'intermédiaire des segments en segment de cylindre (18a, 18b, 18a"_{Rückwand}, 18b"_{Rückwand}, 18a"_{Front}, 18b"_{Front}), de sorte que, lors d'une rotation de l'un des deux éléments de serrage (16a, 16b, 16a', 16b', 16a", 16b") ait lieu une rotation en sens opposé de l'autre des deux éléments de serrage (16a, 16b, 16a', 16b', 16a", 16b").

9. Dispositif de retenue (10, 10', 10") selon l'une des revendications 1 à 8, dans lequel le dispositif de retenue (10, 10', 10") est réalisé pour recevoir, au moyen d'une force de serrage et/ou d'une force de friction qui agit entre l'élément cylindrique (12) et les rainures de serrage (20a, 20b, 20a', 20b', 20a", 20b"), une force de traction qui agit tangentiellement le long de l'élément cylindrique (12) sur ce dernier.

10. Dispositif de retenue (10, 10', 10") selon la revendication 9, dans lequel les deux rainures de serrage (20a, 20b, 20a', 20b', 20a", 20b") se rétrécissent, chacune, le long d'un vecteur de rétrécissement rotorique (24a, 24b), et dans lequel les deux vecteurs de rétrécissement rotoriques (24a, 24b) des deux rainures de serrage (20a, 20b, 20a', 20b', 20a", 20b") s'étendent le long des segments en segment de cylindre (18a, 18b, 18a"_{Rückwand}, 18b"_{Rückwand}, 18a"_{Front}, 18b"_{Front}) et sont orientés en sens opposé l'un à l'autre, et
dans lequel la force de traction agit dans une direction de traction qui s'étend tangentiellement le long des deux vecteurs de rétrécissement rotoriques (24a, 24b).

11. Dispositif de retenue (10, 10', 10") selon la revendication 4, présentant au moins un ressort (34a, 34b), disposé entre le corps principal (14, 14', 14") et l'un des deux éléments de serrage (16a, 16b, 16a', 16b', 16a" 16b"), qui est conçu pour agir avec une force de ressort le long du vecteur de rétrécissement respectif (24a, 24b) sur l'élément de serrage respectif (16a, 16b, 16a', 16b', 16a" 16b").

12. Dispositif de retenue (10, 10', 10") selon l'une des revendications 1 à 11, dans lequel les éléments de serrage (16a, 16b, 16a', 16b', 16a", 16b") sont formés par des rouleaux à rainures de serrage (20a, 20b, 20a', 20b', 20a", 20b") disposés longitudinalement ou en oblique sur le segment en segment de cylindre (18a, 18b, 18a"_{Rückwand}, 18b"_{Rückwand}, 18a"_{Front}, 18b"_{Front}).

13. Dispositif de retenue (10, 10', 10") selon l'une des revendications 1 à 12, dans lequel le corps principal (14, 14', 14") présente un évidement (14a') pour les deux éléments de serrage (16a, 16b, 16a', 16b', 16a", 16") et deux alésages (29a, 29b) réalisés perpendiculairement à l'évidement (14a), dans la zone de l'évidement (14a'), et dans lequel chacun des deux éléments de serrage (16a, 16b, 16a', 16b', 16a", 16") est monté au moyen d'un axe (28a, 28b) s'étendant à travers l'alésage (29a, 29b).

14. Dispositif de retenue (10, 10', 10") selon la revendication 13,
dans lequel les deux rainures de serrage (20a, 20b, 20a', 20b', 20a", 20") se rétrécissent, chacune, le long d'un vecteur de rétrécissement rotorique (24a, 24b), et dans lequel les deux vecteurs de rétrécissement rotoriques (24a, 24b) des deux rainures de serrage (20a, 20b, 20a', 20b', 20a", 20b") s'étendent le long des segments en segment de cylindre (18a, 18b, 18a"_{Rückwand}, 18b"_{Rückwand}, 18a"_{Front}, 18b"_{Front}) et sont orientés en sens opposé l'un par rapport à l'autre, et
dans lequel le dispositif de retenue (10, 10', 10") présente deux ressorts hélicoïdaux (34a, 34b), chaque ressort hélicoïdal (34a, 34b) étant fixé par une vis (36a, 36b) au corps principal (14, 14', 14") et étant en prise avec l'élément de serrage respectif (16a, 16b, 16a', 16b', 16a", 16b") de sorte qu'une force de ressort agisse le long du vecteur de rétrécissement respectif (24a, 24b) sur l'élément de serrage respectif (16a, 16b, 16a', 16b', 16a", 16b").

15. Procédé permettant de faire fonctionner un dispositif de retenue (10, 10', 10") d'un élément cylindrique souple (12), dans lequel le dispositif de retenue (10, 10', 10") comporte un corps principal (14, 14', 14") et deux éléments de serrage (16a, 16b, 16a', 16b', 16a", 16b") montés de manière rotative sur le corps principal (14, 14', 14"), et dans lequel les deux éléments de serrage (16a, 16b, 16a', 16b', 16a", 16b") présentent, chacun, un segment au moins partiellement en segment de cylindre (18a, 18b, 18a"_{Rückwand}, 18b"_{Rückwand}, 18a"_{Front}, 18b"_{Front}) avec une rainure de serrage radiale (20a, 20b, 20a', 20b', 20a", 20b") et sont disposés l'un par rapport à l'autre de sorte que soit réalisée, entre les rainures de serrage radiales (20a, 20b, 20a', 20b', 20a", 20b") des deux segments en segment de cylindre (18a, 18b, 18a"_{Rückwand}, 18b"_{Rückwand}, 18a"_{Front}, 18b"_{Front}), une zone de serrage (22, 22'), les deux rainures de serrage (20a, 20b, 20a', 20b', 20a", 20b") présentant, chacune, une zone de rétrécissement (20a, 20b, 20a', 20b', 20a", 20b") s'étendant le long du segment en segment de cylindre respectif (18a, 18b, 18a"_{Rückwand}, 18b"_{Rückwand}, 18a"_{Front}, 18b"_{Front}) et se rétrécissant par rapport à la profondeur et/ou la largeur de la rainure de serrage (20a, 20b, 20a', 20b', 20a", 20b"), avec l'étape suivante consistant à:
faire tourner les éléments de serrage (16a, 16b, 16a', 16b', 16a", 16b") de sorte que soit modifiée une surface de section (22, 22') de la zone de serrage.
